# EUROPEAN PATENT APPLICATION

(11) **EP 4 656 358 A1**
(43) Date of publication of application: **03.12.2025**
(21) Application number: 24843472.2
(22) Date of filing: 16.07.2024
(51) Int. Cl.: B29C 65/78, B29C 65/00, H01M 50/105, B29L 31/00

(54) **POUCH TRANSFER DEVICE**

(30) Priority: 18.07.2023 KR 20230092767
(71) Applicant: LG Energy Solution, Ltd., Seoul 07335 (KR)
(72) Inventor: JUNG, Woo Jung, Daejeon 34122 (KR)
(74) Representative: Goddar, Heinz J.
(86) International application number: PCT/KR2024/010157
(87) International publication number: WO 2025/018756

(57) **Abstract**

A pouch transfer device according to one example of the present invention comprises a first transport part, on which a lower surface of a pouch is seated, provided to transfer the pouch along a first path, a folding part provided to be capable of entering the inside of the first transport part to support the lower surface of the pouch seated on the first transport part, and a nozzle part disposed on the first path and provided to spray air to an upper portion of an upper surface of the pouch during transfer by the first transport part.

## Description

### Technical Field

The present invention relates to a pouch transfer device, and more specifically, relates to, as a pouch transfer device for transferring a pouch in which an electrode assembly is accommodated, a pouch transfer device capable of preventing folding of the pouch, particularly, by generating a lift force on the upper surface of the pouch during transfer.

This application claims the benefit of priority based on Korean Patent Application No. 10-2023-0092767 dated July 18, 2023, the disclosure of which is incorporated herein by reference in its entirety.

### Background Art

Figures 1 to 3 are diagrams for explaining a conventional pouch transfer device.

Specifically, Figure 1 is a diagram for explaining a case where a curling portion occurs in a pouch during transfer by a conventional transport part, Figure 2 is a diagram for explaining, in a process of transferring a transport part, on which a pouch is seated, to a folding part, a problem occurring when a curling portion of the pouch collides with the folding part, and Figure 3 is a diagram for explaining, in a state where a part of a pouch is folded, a problem occurring when a folding process is performed.

In general, a secondary battery assembly process comprises a pouch forming process, an electrode assembly accommodation process, a pouch folding process, an electrolyte injection process, and a pouch sealing process.

In the pouch forming process, a pouch (1) having flexibility can be drawing-formed to have first and second cup portions (3, 4). Upon the drawing-forming, the cup portions (3, 4) can be formed in the pouch (1) by inserting the pouch (1) into a press and applying a pressure to the pouch (1) with a punch.

The pouch (1) has a first cup portion (3) and a second cup portion (4). The first cup portion (3) and the second cup portion (4) can be disposed to be spaced apart on the same plane. The first cup portion (3) and the second cup portion (4) are partially sunken portions of the pouch (1), which provide a space in which the electrode assembly (9) is accommodated.

In the electrode assembly accommodation process, the electrode assembly (9) can be accommodated in the first cup portion (3) of the pouch (1). Thereafter, the pouch (1), in which the electrode assembly (9) is accommodated, is seated on the transport part (30), and transferred to the folding part (50). The folding part (50) is provided to perform a folding process in which the pouch (1) is folded so that the second cup portion (4) of the pouch (1) covers the electrode assembly (9).

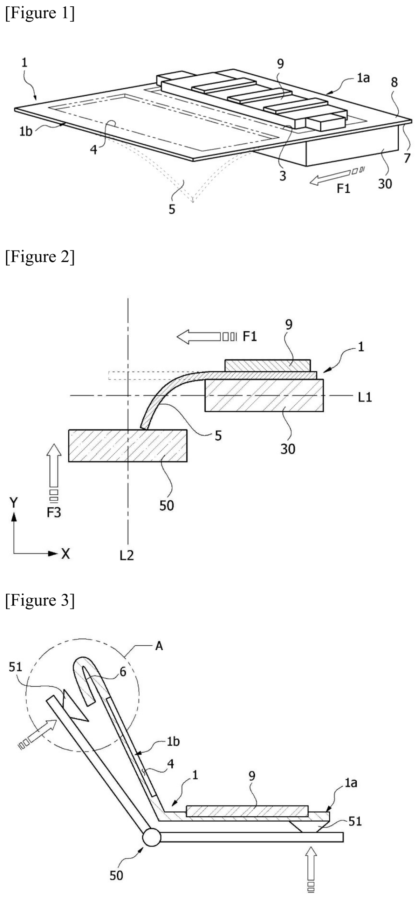

Referring to Figure 2, the transport part (30) transfers the pouch (1) in which the electrode assembly (9) is accommodated to the folding part (50). The transport part (30) moves along a first path (L1) in a direction (F1 direction) closer to the folding part (50), and simultaneously transfers the pouch (1) to a first docking position. The folding part (50) is provided to be movable along a second path (L2) provided to intersect the first path (L1). With reference to Figure 2, the first path (L1) may be in the x-axis direction, and the second path (L2) may be in the y-axis direction.

At this time, the first docking position is a position where the first path (L1) and the second path (L2) intersect, and means a position where the pouch (1) seated on the transport part (30) is transferred to the folding part (50). The folding part (50) moves along the second path (L2) in a direction (F3 direction) facing the first docking position. In the first docking position, the folding part (50) may be provided so that a partial region thereof can enter the interior of the transport part (30).

The entire region of the pouch (1) is not seated on the transport part (30), and a partial region of the pouch is located outside the transport part (30). As one example, the pouch (1) provided with the first cup portion (3) in which the electrode assembly (9) is accommodated may comprise a first region (1a) as a central region and an edge region of the pouch (1) surrounding the first region (1b). In this instance, the first region (1a) represents the central region of the pouch (1) including the first cup portion (3) and the second cup portion (4), and the second region (1b) represents an edge region outside the first region (1a). In addition, at least a part of the first region (1a) may be seated on the transport part (30), and a part of the second region (1b) of the pouch may be located outside the transport part (30). At this time, when the pouch (1) is transferred to the folding part (50) by the transport part (30), a phenomenon, in which the edge of the second region (1b) of the pouch (1) exposed to the outside of the transport part (30) sags in the direction of gravitational force, occurs. In this instance, the area where the pouch (1) sags in the direction of gravitational force during transfer is referred to as a 'curling area (5).'

Referring to Figure 2, the folding part (50) enters the transport part (30) at the first docking position along the second path (L2), where the curling area (5) of the pouch (1) is rolled into a space between the transport part (30) and the folding part (50), and the curling area (5) is folded. In this instance, the area where the curling area (5) is folded is referred to as a 'folding area (7).'

Referring to Figure 3, the folding part (50) comprises a plurality of adsorption parts (51) for adsorbing the edge region of the pouch (1), and when the folding process is performed in a state where the folding area (7) is provided on the pouch (1), the folding area (7) of the pouch (1) is not adsorbed to the folding part (50). Accordingly, the adsorption failure of the pouch (1) occurs.

The adsorption failure of the pouch (1) causes the folding failure of the pouch (1), and the folding failure of the pouch (1) causes the sealing failure of the pouch (1) in the sealing process.

In addition, the sealing failure of the pouch (1) causes leakage of the electrolyte and/or insulation failure of the secondary battery.

### Disclosure

### Technical Problem

The present invention is intended to provide a pouch transfer device capable of spraying air to an upper portion of an upper surface of a pouch during transfer to generate a lift force on the upper surface of the pouch.

Also, the present invention is intended to provide a pouch transfer device that can prevent interference upon transfer through a first transport part by generating a lift force on an upper surface of a pouch under transfer to prevent curling of the pouch.

In addition, the present invention is intended to provide a pouch transfer device capable of spraying air to an upper portion of an upper surface of an edge region in a pouch without being seated on a first transport part to prevent curling of the edge region.

### Technical Solution

A pouch transfer device according to one example of the present invention comprises a first transport part, on which a lower surface of a pouch is seated, provided to transfer the pouch along a first path, a folding part provided to be capable of entering the inside of the first transport part to support the lower surface of the pouch seated on the first transport part, and a nozzle part disposed on the first path and provided to spray air to an upper portion of an upper surface of the pouch during transfer by the first transport part.

Also, the pouch may comprise a first region, in which an electrode assembly is accommodated, in contact with the first transport part, and a second region without contacting the first transport part.

In addition, the nozzle part may be provided to inject the air to the upper portion of the second region.

Furthermore, the nozzle part may be provided to inject the air in a direction parallel to the direction where the first transport part moves toward the folding part along the first path. As one example, the nozzle part may be provided to inject the air in a direction parallel to the first path. In such a structure, an air current may be formed on the upper surface of the pouch during transfer by the first transport part along a direction parallel to the first path, and a lift force may be generated in the opposite direction of the direction of gravitational force by the air current, and the curling of the edge region of the pouch may be prevented by the lift force.

Also, the nozzle part may comprise a first nozzle provided to inject the air to an upper portion of a first edge region in the second region of the pouch, and a second nozzle disposed to be spaced apart from the first nozzle and provided to inject the air to an upper portion of a second edge region in the second region of the pouch.

In addition, the pouch transfer device may comprise a control part controlling the first transport part, the folding part, and the nozzle part.

Furthermore, the control part may be provided to inject air to an upper portion of the pouch seated on the first transport part upon a transfer mode of transferring the pouch to the folding part along the first path.

Also, the control part may allow the folding part to move to a first docking position along a second path intersecting the first path from the lower portion of the first transport part after the first transport part reaches the first docking position along the first path.

In addition, the folding part may be provided to enter the lower portion of the first transport part along the second path to support the lower surface of the pouch at the first docking position.

Furthermore, the control part may be provided to transfer the folding part to a folding position along the second path so that the pouch seated on the folding part at the first docking position is separated from the first transport part.

Also, the folding part may be provided to perform a folding mode of vacuum-adsorbing the lower surface of the pouch at the folding position and folding the adsorbed pouch.

In addition, the control part may stop an operation of the nozzle part when the first transport part reaches the first docking position.

Furthermore, the first transport part may comprise a first grip part contact-supporting a first region of the pouch, and a plurality of first seating bars connected to the first grip part and arranged at a predetermined interval. In addition, the pouch may have a partial region of the lower surface thereof exposed to a space between two adjacent first seating bars in a state where it is seated on the first transport part.

Also, the folding part may comprise a first folding grip part provided to be capable of entering the inside of the first grip part along a second path intersecting the first path at the lower portion of the first transport part, and a plurality of first folding bars connected to the first folding grip part and arranged at a predetermined interval.

In addition, when the first folding grip part enters the inside of the first grip part, each first folding bar may be provided to enter the space between two adjacent first seating bars.

Furthermore, the folding part may comprise a second folding grip part hinge-connected to the first folding grip part.

Also, the pouch transfer device may comprise a second transport part for transferring the pouch, in which the electrode assembly is accommodated, to the first transport part.

In addition, the second transport part may be provided so that it enables to enter the inside of the first transport part, and supports the lower surface of the pouch.

Furthermore, the second transport part may comprise a second grip part for supporting a first region of the pouch, in which the electrode assembly is accommodated, and a plurality of second seating bars connected to the second grip part and arranged at a predetermined interval.

In addition, each second seating bar may be provided to be capable of entering a space between two adjacent first seating bars.

### Advantageous Effects

As described above, the pouch transfer device related to at least one example of the present invention has the following effects.

By spraying air to an upper portion of an upper surface of a pouch during transfer, it is possible to generate a lift force on the upper surface of the pouch.

Also, by generating a lift force on an upper surface of a pouch during transfer to prevent curling of the pouch, it is possible to prevent interference upon transfer through a transport part.

In addition, by spraying air to an upper portion of an upper surface of an edge region in a pouch without being seated on a first transport part, it is possible to prevent curling of the edge region.

Furthermore, it is possible to prevent adsorption failure of a pouch upon a folding process.

### Description of Drawings

Figures 1 to 3 are diagrams for explaining a conventional pouch transfer device.

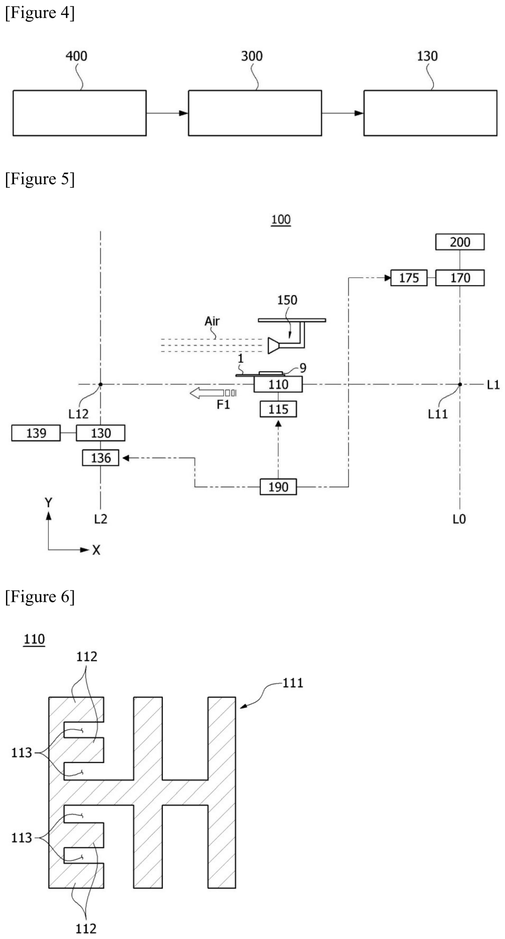

Figure 4 is a configuration diagram showing a secondary battery manufacturing device related to one example of the present invention.
Figure 5 is a configuration diagram of a pouch transfer device related to one example of the present invention.
Figure 6 is a plan view of a first transport part.

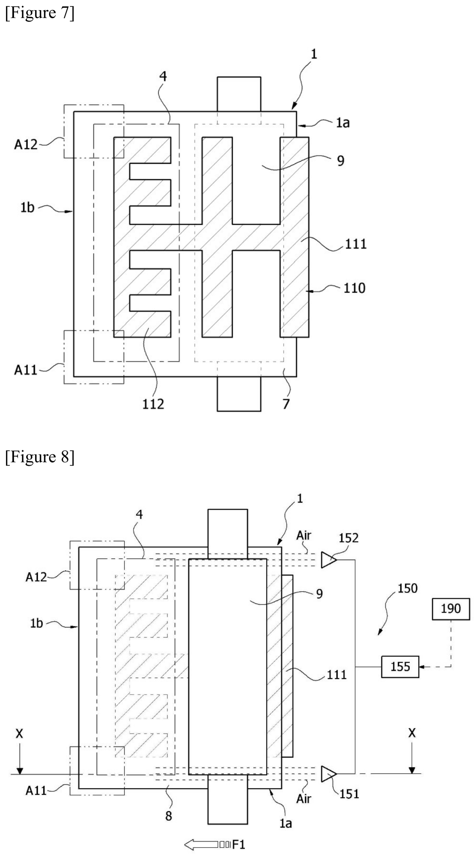

Figure 7 is a bottom view of the first transport part, which shows a state where a pouch is seated thereon.
Figure 8 is a plan view of a first transport part, which shows a state where a pouch is seated thereon.

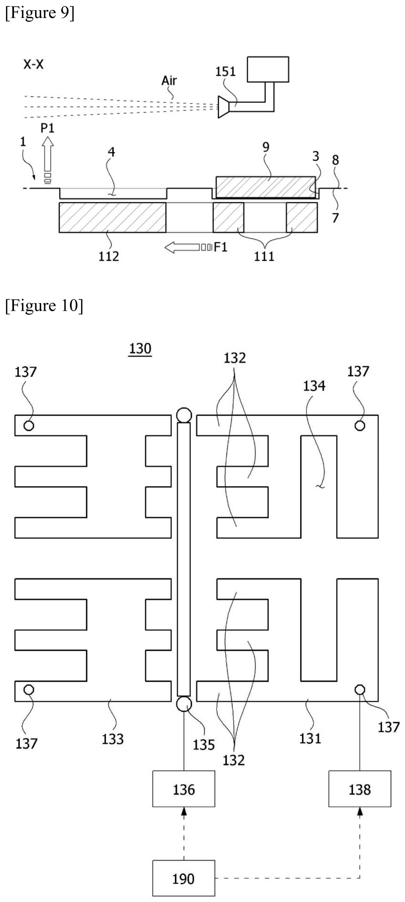

Figure 9 is a cross-sectional diagram of a state cut along line X-X of Figure 8, which schematically shows an arrangement relationship of a first transport part, a pouch, and a first nozzle when air is sprayed to an upper portion of an upper surface of the pouch.
Figure 10 is a plan view of a folding part constituting a pouch transfer device according to one example of the present invention.

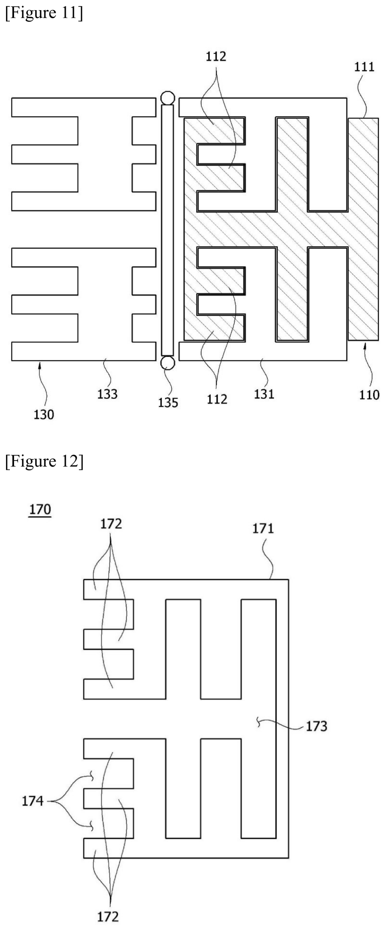

Figure 11 is a plan view showing a folding part and a first transport part at a first docking position.
Figure 12 is a plan view of a second transport part.

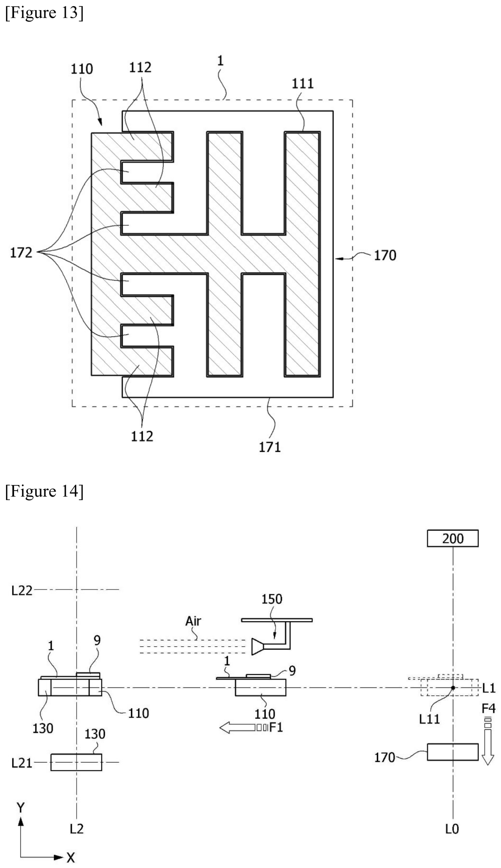

Figure 13 is a plan view showing a first transport part and a second transport part at a second docking position.
Figure 14 is a schematic diagram showing one operating state of a pouch transfer device related to one example of the present invention.

### Mode for Invention

Hereinafter, with reference to the attached drawings, a pouch transfer device according to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

Figure 4 is a configuration diagram showing a secondary battery manufacturing device related to one example of the present invention.

Referring to Figure 4, the secondary battery manufacturing device related to one example of the present invention may comprise a pouch processing part (140) for cutting a pouch, an assembly insertion part (300) for accommodating an electrode assembly in the pouch, and a folding part (130) for folding the pouch into which the electrode assembly is inserted.

Figure 5 is a configuration diagram of a pouch transfer device (100) related to one example of the present invention.

Referring to Figures 4 and 5, the secondary battery manufacturing device may comprise a pouch transfer device (100) for transferring a pouch (1), in which an electrode assembly (9) is accommodated, to a folding part (130).

Also, in this document, the pouch (1) has the same structure as described in Figure 1, and hereinafter, the pouch transfer device (100) will be described with reference to Figure 1.

Referring to Figures 1 and 5, the pouch transfer device (100) related to one example of the present invention comprises a first transport part (110), on which a lower surface (7) of a pouch (1) is seated, provided to transfer the pouch (1) along a first path (L1).

Also, the pouch transfer device (100) comprises a folding part (150) provided to be capable of entering the inside of the first transport part (110) to support the lower surface (7) of the pouch (1) seated on the first transport part (110).

In addition, the pouch transfer device (100) comprises a nozzle part (150) disposed on the first path (L1) and provided to spray air to the upper portion of the upper surface (8) of the pouch (1) during transfer by the first transport part (110).

Furthermore, the pouch transfer device (100) may comprise a control part (190) controlling the first transport part (110), the folding part (130), and the nozzle part (150).

In this document, referring to Figure 5, the first path (L1) may be provided along the x-axis direction, and the second path (L2) may be provided to intersect the first path (L1) and may be provided along the y-axis direction.

Figure 6 is a plan view of a first transport part (110), Figure 7 is a bottom view of a first transport part, which shows a state where a pouch is seated thereon, and Figure 8 is a plan view of a first transport part, which shows a state where a pouch is seated thereon.

In addition, Figure 9 is a cross-sectional diagram of a state cut along line X-X of Figure 8, which schematically shows an arrangement relationship of a first transport part, a pouch, and a first nozzle when air is sprayed to an upper portion of an upper surface of the pouch.

Also, the pouch (1) may comprise a first region (1a), in which an electrode assembly (9) is accommodated, in contact with the first transport part (110), and a second region (1b) without contacting the first transport part (110).

The pouch (1) has a first cup portion (3) and a second cup portion (4). The first cup portion (3) and the second cup portion (4) may be disposed to be spaced apart from each other on the same plane. The first cup portion (3) and the second cup portion (4) are partially sunken portions of the pouch (1), which provide a space in which the electrode assembly (9) is accommodated. For example, in the electrode assembly (9) accommodation process, the electrode assembly (9) may be accommodated in the first cup portion (3) of the pouch (1).

At this time, the first region (1a) of the pouch (1) may mean a central region of the pouch (1) including one or more cup portions, and as one example, the first region (1a) may mean a central region including the first cup portion (3) and the second cup portion (4). In addition, the second region (1b) may mean an edge region of the pouch (1) surrounding the outer periphery of the central region.

Referring to Figure 7, the first transport part (110) may have a smaller size than the lower surface (7) of the pouch (1). In such a structure, the edge region of the pouch (1) may not be supported by the first transport part (110). That is, the second region (1b) does not contact the first transport part (110) and is located outside the first transport part (110). Particularly, the edge region (A11, A12) on the side of the second cup portion (4) where the electrode assembly (9) is not accommodated may be greatly affected by gravity when the first transport part (110) moves, and accordingly, curling may occur.

Referring to Figures 5, 8, and 9, the nozzle part (150) may be provided to spray the air to the upper portion of the second region (1b).

In addition, the nozzle part (150) may be provided to spray the air in a direction parallel to the direction where the first transport part (110) moves toward the folding part (130) along the first path (L1).

As one example, the nozzle part (150) may be provided to spray air in a direction parallel to the first path (L1). In such a structure, an air current is formed along a direction parallel to the first path (L1) on the upper surface (8) of the pouch (1) during transfer by the first transport part (110), and a lift force (P1) is generated in the opposite direction to the direction of gravitational force by the air current. The curling of the edge region (A11, A12) of the pouch (1) may be prevented by the lift force (P1).

Also, the nozzle part (150) may comprise a first nozzle (151) provided to spray the air to the upper portion of the first edge region (A11) of the second region (1b) of the pouch (1), and a second nozzle (152) disposed to be spaced apart from the first nozzle (151) and provided to spray the air to the upper portion of the second edge region (A12) of the second region (1b) of the pouch (1).

In addition, the control part (190) may be provided to spray air to the upper portion of the pouch (1) seated on the first transport part (110) upon the transfer mode of transferring the pouch (1) to the folding part (130) along the first path (L1).

Furthermore, the control part (190) may allow the folding part (130) to move to a first docking position (L12) along a second path (L2) intersecting the first path (L1) from the lower portion of the first transport part (100) after the first transport part (110) reaches the first docking position (L12) along the first path (L1).

At this time, the first docking position (L12) is the position where the first path (L1) and the second path (L2) intersect, and means the position where the pouch (1) seated on the first transport part (110) is transferred to the folding part (130).

Also, the folding part (130) may be provided to enter the lower portion of the first transport part (110) along the second path (L2) to support the lower surface of the pouch (1) at the first docking position (L12).

In addition, the control part (190) may stop an operation of the nozzle part (150) when the first transport part (110) reaches the first docking position (L12).

The first transport part (110) may be provided so that at least a partial region of the first region (1a) of the lower surface (7) of the pouch (1) is seated (contacted) without covering the entire region thereof. In addition, at least a partial region of the first region (1a) of the lower surface (7) of the pouch (1) may be exposed toward the lower portion of the first transport part (110) without contacting the first transport part (110).

Also, the first transport part (110) may comprise a first grip part (111) contact-supporting the first region (1a) of the pouch, and a plurality of first seating bars (112) connected to the first grip part (111) and arranged at a predetermined interval.

In addition, the pouch (1) may have a partial region of the lower surface (7) thereof exposed to a space (113) between two adjacent first seating bars (112) in a state where it is seated on the first transport part (110).

Referring to Figures 6 and 7, the first transport part (110) may have a first grip part (111) in which a plurality of first seating bars (112) is arranged at a predetermined interval.

The second region (1b) of the pouch (1) may comprise a first edge region (A11) and a second edge region (A12). The first edge region (A11) and the second edge region (A12) may be edge regions on both sides of the region in which the second cup portion (4) is provided.

In this instance, the first and second edge regions (A11, A12) are the portions where the pouch (1) is not seated by the first grip part (111) and the first seating bar (112), and are located adjacent to the second cup portion (4) in which the electrode assembly (9) is not accommodated. The first and second edge regions (A11, A12) correspond to the curling areas (5, see Figure 1) mentioned in the background art.

Referring to Figure 5, the first transport part (110) may comprise a first drive part (115) providing the first grip part (111) with a drive force. By the first drive part (115), the first grip part (111) may reciprocally move along the first path (L1). The first drive part (115) may also comprise an LM guide capable of moving in one-axis direction (x-axis direction), and may also comprise an orthogonal robot capable of moving in two-axis directions. The first transport part (110) may be a shuttle part movably mounted on the LM guide.

Referring to Figure 5, the nozzle part (150) is disposed on the first path (L1). The nozzle part (150) is provided to spray air to the upper portion of the upper surface (8) of the pouch (1) during transfer by the first transport part (110).

The nozzle part (150) is provided to spray air to the upper portion of the second region (1b). The nozzle part (150) may be located above the first transport part (110) moving along the first path (L1).

Referring to Figure 8, the nozzle part (150) may comprise a first nozzle (151), a second nozzle (152), and a pneumatic supply part (155). The pneumatic supply part (155) is connected to the first and second nozzles (151, 152) to be capable of fluid migration.

Referring to Figures 5 and 8, the first nozzle (151) may be provided to spray air to the upper portion of the first edge region (A11) of the second region (1b) of the pouch (1). In addition, the second nozzle (152) may be disposed to be parallel to and spaced apart from the first nozzle (151).

The second nozzle (152) may be provided to spray air to the upper portion of the second edge region (A12) of the second region (1b) of the pouch (1). As described above, the second edge region (A12) may be provided on the opposite side of the first edge region (A11).

Referring to Figures 8 and 9, the first and second nozzles (151, 152) may be disposed so that air is concentratedly sprayed onto the upper portions of the first and second edge regions (A11, A12) of the pouch (1). When the first and second nozzles (151, 152) spray air onto the upper portions of the first and second edge areas (A11, A12) of the pouch (1) during transfer on the first transport part (110), a lift force (P1) is generated on the first and second edge regions (A11, A12) of the upper surface (8) of the pouch (1).

The lift force (P1) is a force pulling the first and second edge regions (A11, A12) of the pouch (1) in a direction opposite to the direction of gravitational force. Due to such a lift force (P1), it is possible to prevent the curling phenomenon in which the first and second edge regions (A11, A12) sag in the direction of gravitational force during transfer by the first transport part (110).

Figure 10 is a plan view of a folding part (130) constituting a pouch transfer device according to one example of the present invention, and Figure 11 is a plan view showing a folding part and a first transport part at a first docking position.

The folding part (130) is a device performing a folding process of the pouch (1).

The folding part (130) may be provided to be capable of entering the inside of the first transport part (110) to support the lower surface (8) of the pouch (1) seated on the first transport part (110), and may be in contact with at least a partial region of the first region (1a) when entering the inside of the first transport part (110).

As described above, at least a partial region of the first region (1a) of the lower surface (7) of the pouch (1) may be exposed toward the lower portion of the first transport part (110) without being in contact with the first transport part (110). The folding part (130) supports the exposed region toward the lower portion of the first transport part (110) at the first docking position (L12). That is, a partial region of the lower surface (7) is exposed to the space (113) between two adjacent first seating bars (112), and the folding part (130) enters the space (113) to be in contact with a partial region of the exposed lower surface (7).

The folding part (130) is provided to be capable of entering the inside of the first transport part (110) to support the lower surface (7) of the pouch (1) seated on the first transport part (110). The folding part (130) is provided to be in contact with at least a partial region of the first region (1a) of the pouch (1) when entering the inside of the first transport part (110).

Referring to Figures 10 and 11, the folding part (130) may comprise a first folding grip part (131) provided to be capable of entering the inside of the first grip part (111), and a second folding grip part (133) hinge-connected to the first folding grip part (131).

Also, the folding part (130) may comprise a first folding grip part (131) provided to be capable of entering the inside of the first grip part (111) along a second path (L2) intersecting the first path at the lower portion of the first transport part (110), and a plurality of first folding bars (132) connected to the first folding grip part (131) and arranged at a predetermined interval.

In addition, when the first folding grip part (131) enters the inside of the first grip part (111), each first folding bar (132) may be provided to enter the space (113) between two adjacent first seating bars (112).

The first folding grip part (131) and the first transport part (110) may have various shapes, and may have a corresponding shape which is dockable to be capable of transferring the pouch (1) at the first docking position (L12). In this document, the corresponding shape means a shape that the first folding grip part (131) can be separated (detached) from the first transport part (110) along the second path after the first folding grip part (131) enters the inside of the first transport part (110) along the second path, which may not physically contact or be engaged at the first docking position (L12).

The first folding grip part (131) may be provided so that at least a partial region of the first region (1a) of the pouch (1) exposed to the lower portion of the first grip part (111) is seated. The first folding grip part (131) may be connected to a plurality of first folding bars (132) provided to be insertable into the space (113) between the first seating bars (112) of the first grip part (111).

Also, the first folding grip part (131) may be provided so that upon entering the inside of the first grip part (111), each first folding bar (132) enters the space (113) between two adjacent first seating bars (112) to be positioned on the plurality of first seating bars (112).

In addition, the second folding grip part (133) is hinge-connected to the first folding grip part (131), and is provided so that the remaining partial region of the pouch (1) protruding from the first transport part (110) is seated.

The folding part (130) may comprise a hinge axis (135) hinge-connecting the first folding grip part (131) and the second folding grip part (133), and a folding drive part (136) providing the hinge axis (135) with a drive force and provided to rotate the first and second folding grip parts (131, 133).

Also, the folding part (130) may comprise a third drive part (139) providing the first folding grip part (131) with a transfer drive force. By the third drive part (139), the first folding grip part (131) may reciprocally move along the second path (L2). The third drive part (139) may also comprise an LM guide capable of moving in one-axis direction (y-axis direction), and may also comprise an orthogonal robot capable of moving in two-axis directions.

In addition, the folding part (130) may comprise a plurality of adsorption members (137) for adsorbing the pouch (1) seated on the first and second folding grip parts (131, 133), and a vacuum pressure applying part (138) for providing each adsorption member (137) with vacuum pressure.

Figure 12 is a plan view of a second transport part, and Figure 13 is a plan view showing a first transport part and a second transport part at a second docking position.

In addition, Figure 14 is a schematic diagram showing one operating state of a pouch transfer device related to one example of the present invention.

The pouch transfer device (100) may comprise a second transport part (170) for transferring a pouch (1), in which an electrode assembly (9) is accommodated, to a first transport part (110).

Also, the second transport part (170) may be provided so that it can enter the inside of the first transport part (110), and supports the lower surface (7) of the pouch (1).

In addition, the second transport part (170) may comprise a second grip part (171) for supporting the first region (1a) of the pouch (1), in which the electrode assembly (9) is accommodated, and a plurality of second seating bars (172) connected to the second grip part (171) and arranged at a predetermined interval. Furthermore, each second seating bar (172) may be provided to be capable of entering a space between two adjacent first seating bars (112). Likewise, each first seating bar (112) may be provided to be capable of entering a space (174) between two adjacent second seating bars (172).

Also, the second grip part (171) may have a space portion (173) capable of being entered by the first grip part (111).

In addition, the second transport part (170) may perform a function of transferring the pouch (1) discharged from an accommodation part (200) along a discharge path (L0) to the first transport part (110). In the accommodation part (200), pouches (1), in which electrode assemblies (9) are accommodated, may be accommodated.

The second transport part (170) may be provided to be capable of entering the inside of the first transport part (110) and to support the lower surface of the pouch (1) such that a partial region of the first region (1a) of the lower surface (7) of the pouch (1) is exposed to the lower portion.

Referring to Figures 12 and 13, the second transport part (170) may have a second grip part (171) in which a plurality of second seating bars (172) are arranged at a predetermined interval.

In addition, the second grip part (171) is provided so that upon entering the inside of the first grip part (111), each second seating bar (172) enters the space (113) between two adjacent first seating bars (112) to be positioned between the plurality of first seating bars (112).

The second transport part (170) and the first transport part (110) may have various shapes, and may have a corresponding shape which is dockable to be capable of transferring the pouch (1) at the second docking position (L11).

The second docking position (L11) means a point where the first path (L1) and the discharge path (L0) intersect, and means a position where the pouch (1) seated on the second transport part (170) is transferred to the first transport part (110).

In this document, the corresponding shape means a shape that the second transport part (170) can be separated (detached) from the first transport part (110) along the discharge path (L0) after the second transport part (170) enters the inside of the first transport part (110) along the discharge path (L0), which may not physically contact or be engaged at the second docking position (L11).

Referring to Figure 5, the second transport part (170) further comprises a second drive part (175) providing the second grip part (171) with a drive force. By the second drive part (175), the second grip part (171) may reciprocally move along the discharge path (L0). The second drive part (175) is controlled by the control part (190).

The second drive part (175) may also comprise an LM guide capable of moving in one axis direction (y-axis direction), and may also comprise an orthogonal robot capable of moving in two-axis directions. The second transport part (170) may be a shuttle part movably mounted on the LM guide.

Upon operation of the second drive part (175), the second grip part (171) is inserted into the first grip part (111) of the first transport part (110) located at the first docking position (L11), while being lowered from the accommodation part (200) along the discharge path (L0) in the direction (F4 direction) toward the second docking position, and simultaneously places the pouch (1) on the upper surface of the first grip part (111).

Referring to Figure 14, a process, in which the pouch (1) discharged from the accommodation part (200) is transferred to the folding part (130), will be described.

The control part (190) controls operations of the first transport part (110), the folding part (130), the nozzle part (150), and the second transport part (170) for each transfer step of the pouch.

When the pouch (1) discharged from the accommodation part (200) is seated on the upper surface of the second grip part (171), the second transport part (170) moves downward in the direction (F4 direction) toward the second docking position (L11) along the discharge path (L0).

The control part (190) operates the first drive part (115) and the second drive part (175), respectively, so that the first grip part (111) is first positioned at the second docking position (L11), and then the second grip part (171) reaches it.

At the second docking position (L11), the second grip part (171) may enter the first grip part (111), and may seat the pouch (1) on the upper surface of the first grip part (111) while continuously moving along the discharge path (L0).

Referring to Figures 5 and 14, the control part (190) controls the operation of the first drive part (115) so that the second grip part (171) is separated from the first grip part (111) at the second docking position (L11), and then the first grip part (111) moves in the direction (F1 direction) toward the first docking position (L12) along the first path (L1). The first grip part (111) moves from the second docking position (L11) to the first docking position (L12) along the first path (L1).

When the first transport part (110) moves in the direction (F1 direction) toward the first docking position (L12), the control part (190) allows the nozzle part (150) to spray air to the upper surface of the pouch (1) seated on the first transport part (110).

After the first transport part (110) reaches the first docking position (L12), the control part (190) allows the folding part (130) to move to the first docking position (L12) along the second path (L2) intersecting the first path (L1) at the lower portion of the first transport part (110).

Also, the control part (190) may be provided to transfer the folding part (130) to the folding position (L22) along the second path (L2) so that the pouch (1) seated on the folding part (130) at the first docking position (L12) is separated from the first transport part (110).

In addition, if the folding part (130) is separated from the first transport part (110), the control part (190) may allow to stop the operation of the nozzle part (150).

Furthermore, the folding part (130) may be provided to perform a folding mode of vacuum-adsorbing the lower surface of the pouch at the folding position (L22) and folding the adsorbed pouch.

Meanwhile, at the folding position (L22), the position of the pouch (1) seated on the folding part (130) may also be adjusted. For example, the position of the pouch (1) may also be adjusted so that the folding line of the pouch (1) is located on the hinge axis (135), and the position may be adjusted through an adsorption-type gripper.

If the first transport part (110) reaches the first docking position (L12), the folding part (130) moves from a folding standby position (L21) to the first docking position (L12) along the second path (L2), and simultaneously enters the first transport part (110). The folding part (130) receives the pouch (1) seated on the first transport part (110) at the first docking position (L12) to move to the folding position (L22).

If the folding part (130) reaches the folding position (L22), the control part (190) may control the folding part (130) to perform a folding process. In the folding process, the pouch (1) is vacuum-absorbed on the upper surface of the first and second folding grip parts (131, 133), and then the second folding grip part (133) rotates in a direction closer to the first folding grip part (131).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the pouch transfer device related to at least one example of the present invention, curling of the pouch is prevented by generating a lift force on the upper surface of the pouch during transfer, whereby it is possible to prevent interference upon transfer through the transport part.

## Claims

1. A pouch transfer device comprising:
a first transport part, on which a lower surface of a pouch is seated, provided to transfer the pouch along a first path;
a folding part provided to be capable of entering the inside of the first transport part to support the lower surface of the pouch seated on the first transport part; and
a nozzle part disposed on the first path and provided to spray air to an upper portion of an upper surface of the pouch during transfer by the first transport part.

2. The pouch transfer device according to claim 1, wherein
the pouch comprises a first region, in which an electrode assembly is accommodated, in contact with the first transport part, and a second region without contacting the first transport part, and
the nozzle part is provided to inject the air to the upper portion of the second region.

3. The pouch transfer device according to claim 1, wherein
the nozzle part is provided to inject the air in a direction parallel to the direction where the first transport part moves toward the folding part along the first path.

4. The pouch transfer device according to claim 2, wherein
the nozzle part comprises a first nozzle provided to inject the air to an upper portion of a first edge region in the second region of the pouch; and
a second nozzle disposed to be spaced apart from the first nozzle and provided to inject the air to an upper portion of a second edge region in the second region of the pouch.

5. The pouch transfer device according to claim 1, further comprising
a control part controlling the first transport part, the folding part, and the nozzle part, wherein
the control part is provided to inject air to an upper portion of the pouch seated on the first transport part upon a transfer mode of transferring the pouch to the folding part along the first path.

6. The pouch transfer device according to claim 5, wherein the control part allows
the folding part to move to a first docking position along a second path intersecting the first path from the lower portion of the first transport part
after the first transport part reaches the first docking position along the first path.

7. The pouch transfer device according to claim 6, wherein
the folding part is provided to enter the lower portion of the first transport part along the second path to support the lower surface of the pouch at the first docking position, and
the control part is provided to transfer the folding part to a folding position along the second path so that the pouch seated on the folding part at the first docking position is separated from the first transport part.

8. The pouch transfer device according to claim 7, wherein
the folding part is provided to perform a folding mode of vacuum-adsorbing the lower surface of the pouch at the folding position and folding the adsorbed pouch.

9. The pouch transfer device according to claim 6, wherein
the control part stops an operation of the nozzle part when the first transport part reaches the first docking position.

10. The pouch transfer device according to claim 1, wherein
the first transport part comprises a first grip part contact-supporting a first region of the pouch, and a plurality of first seating bars connected to the first grip part and arranged at a predetermined interval, and
the pouch has a partial region of the lower surface thereof exposed to a space between two adjacent first seating bars in a state where it is seated on the first transport part.

11. The pouch transfer device according to claim 10, wherein
the folding part comprises a first folding grip part provided to be capable of entering the inside of the first grip part along a second path intersecting the first path at the lower portion of the first transport part, and a plurality of first folding bars connected to the first folding grip part and arranged at a predetermined interval, and
when the first folding grip part enters the inside of the first grip part, each first folding bar is provided to enter the space between two adjacent first seating bars.

12. The pouch transfer device according to claim 11, wherein
the folding part comprises a second folding grip part hinge-connected to the first folding grip part.

13. The pouch transfer device according to claim 10, further comprising
a second transport part for transferring the pouch, in which the electrode assembly is accommodated, to the first transport part, wherein
the second transport part is provided so that it enables to enter the inside of the first transport part, and supports the lower surface of the pouch.

14. The pouch transfer device according to claim 13, wherein
the second transport part comprises a second grip part for supporting a first region of the pouch, in which the electrode assembly is accommodated, and a plurality of second seating bars connected to the second grip part and arranged at a predetermined interval.

15. The pouch transfer device according to claim 14, wherein
each second seating bar is provided to be capable of entering a space between two adjacent first seating bars.
